## Europäisches Patentamt
## European Patent Office
## Office européen des brevets

(19)

(11) Veröffentlichungsnummer: **0 274 549**
**B1**

(12)

# EUROPÄISCHE PATENTSCHRIFT

(45) Veröffentlichungstag der Patentschrift:
**13.06.90**

(51) Int. Cl.⁵: **E05D 7/10**, H02B 1/26

(21) Anmeldenummer: **87100185.5**

(22) Anmeldetag: **09.01.87**

(54) **Aushängbares Verschwindscharnier für Schaltschränke.**

(43) Veröffentlichungstag der Anmeldung:
**20.07.88 Patentblatt 88/29**

(45) Bekanntmachung des Hinweises auf die Patenterteilung:
**13.06.90 Patentblatt 90/24**

(84) Benannte Vertragsstaaten:
**DE FR GB IT SE**

(56) Entgegenhaltungen:
**EP-A- 0 157 344**
**GB-A- 473 690**
**US-A- 437 492**
**US-A- 2 131 802**
**US-A- 2 778 053**
**US-A- 2 913 200**
**US-A- 3 021 555**
**US-A- 3 406 995**
**US-A- 4 372 703**

(73) Patentinhaber: **Ramsauer, Dieter, Am
Neuhauskothen 20, D-5620 Velbert 11(DE)**

(72) Erfinder: **Ramsauer, Dieter, Am Neuhauskothen 20,
D-5620 Velbert 11(DE)**

(74) Vertreter: **Stratmann, Ernst, Dr.-Ing., Schadowplatz 9,
D-4000 Düsseldorf 1(DE)**

ACTORUM AG

**Beschreibung**

Die Erfindung betrifft ein aushängbares Verschwindscharnier für Schaltschränke, bestehend aus einem ersten, auf der Innenseite des Türblatts befestigten Scharnierteil mit einem Lagerauge, aus einem zweiten, das erste Scharnierteil U-förmig umgreifende mit einem vertikalen Rahmenschenkel des Schrankkorpus verbundenen zweiten Scharnierteil mit zwei Lageraugen in den U-Schenkelenden, und mit einer Lagerbolzeneinrichtung zur gelenkigen Verbindung der Scharnierteile.

Ein derartiges Scharnier ist aus der europäischen Patentanmeldung mit der Veröffentlichungsnummer 0 157 344 bereits bekannt. Ähnliche Anordnungen sind auch aus den Katalogblättern C 090 und C 100 der Firma EMKA Beschlagteile GmbH & Co. KG, Velbert, aus dem März 1985 bekannt. Die beiden letztgenannten Konstruktionen haben den Nachteil, daß die als Winkelstift ausgebildeten Lagerbolzeneinrichtungen zur Demontage des Türblatts vom Schrankkorpus nach oben herausgezogen werden müssen, wozu stets ausreichend Platz vorhanden sein muß, was nicht immer gewährleistet ist, und was noch den weiteren Nachteil hat, daß die anschließende Montage des Türblattes am Schrankkorpus schwierig ist, weil as zum Einstecken des Winkelstiftes vorgesehene Lagerauge recht versteckt liegt und daher schlecht zu finden und schlecht zugänglich ist.

Das aus der europäischen Patentschrift bekannte Scharnier ist demgegenüber günstiger, weil zur Demontage des Türblatts vom Schrankkörper - die hin und wieder erforderlich ist, um an den Schaltschrankinnenraum bei Verdrahtungsarbeiten besser herankommen zu können - zum Ziehen des Lagerstiftes weniger Platz benötigt wird. Dies ergibt sich aus einer Teilung des Lagerstiftes und die Möglichkeit, die beiden Lagerstifthälften jeweils getrennt soweit herauszuziehen, daß sie das Lagerauge des ersten, zwischen den U-Schenkeln des zweiten Scharnierteils liegenden ersten Scharnierteils freigeben. Durch besondere Federblockiereinrichtungen können zudem die Lagerstifthälften in der teilweise herausgezogenen Stellung festgehalten werden, so daß ein späteres Einführen dieser Lagerstifthälften bei erneuter Montage des Türblatts am Türrahmen entfällt, lediglich ein Hereindrücken der noch im zweiten Scharnierteil befindlichen Stiftenden in das erste Scharnierteil ist erforderlich.

Scharniere, deren beide Scharnierhälften trennbar sind, sind an sich in anderem Zusammenhang bekannt. So zeigen die US-PSn 437 492, 2 131 802, 2 778 053, 2 913 200, 3 021 555 und 3 406 995 jeweils ein Scharnierteil mit U-förmiger Lagerbolzenaufnahme, das mittels Federstift, Schwenkhebel bzw. Schiebeteil verschließbar ist. In der GB-PS 473 690 dient eine Schraube als Verschluß für die U-förmige Lageraufnahme. Alle genannten Kontruktionen können jedoch nicht im Eckbereich der Türblattabkantung eines Blechschrankes befestigt werden.

Jedoch hat auch diese Konstruktion noch Nachteile: Zum einen müssen zwei Stifte gezogen werden, wozu zudem spezielles Werkzeug erforderlich ist, außerdem ist durch die Teilung des Lagerstiftes oder Scharnierbolzens die Stabilität beeinträchtigt, da kurze Stifte zum Verkanten neigen. Auch ist das Einhängen noch mit gewissen Schwierigkeiten verbunden, da vor dem Einschieben der beiden Lagerstifthälften zunächst erstes und zweites Scharnierteil in die richtige Stellung zueinander gebracht werden muß, derart, daß die Lageraugen der beiden Scharnierteile zueinander fluchten. Es hat sich auch gezeigt, daß der Stift infolge von Lackanhäufungen oft recht schwer zu betätigen ist, so daß zum Einschieben des Stiftes meist die Kraft der hand nicht ausreicht, sondern ein Hammer benutzt werden muß, was wiederum zu Lackschäden führen könnte.

Ergänzend sei noch auf die beiden Katalogblätter C 085.2 und C 085.4 verwiesen, in denen Scharniere dargestellt sind, einmal für Einzelschrankanwendung, zum anderen für Reihen schrankanwendungen bei denen, die Demontage ebenfalls durch Ziehen eines Winkelstiftes erfolgt, der im erstgenannten Fall gleichzeitig auch der Lagerbolzen ist. Beide Konstruktionen sind für bestimmte Anwendungsfälle sehr vorteilhaft, haben aber auch wiederum den Nachteil des Platzbedarfs zum Herausziehen des Stiftes, außerdem ist ebenfalls das Einhängen schwierig, besonders dann, wenn mehrere Scharniere an einem Türblatt befestigt sind und gleichzeitig zueinander ausgerichtet werden müssen. Dies gelingt nur mit Schwierigkeiten, da es wegschwenkende Teile gibt, die schwer gleichzeitig zu handhaben sind. Ein weiterer Nachteil der beiden letztgenannten Scharniere ist auch noch der, daß sie sichtbar sind.

Aufgabe der Erfindung ist es, das aus dem Stand der Technik bekannte aushängbare Verschwindscharnier, das ist das aus der europäischen Patentschrift 0 157 344 bekannte Scharnier, dahingehend zu verbessern, daß die im Zusammenhang mit diesem Stand der Technik geschilderten Nachteile vermieden werden, insbesondere also noch eine weitere Montageerleichterung sich ergibt und auch eine bessere Führung ermöglicht wird, indem ein ungeteilter Stift zur Anwendung kommt, ohne daß dadurch der Platzbedarf zwischen dem oberen Scharnierende und dem oberen Ende des Türblattes, wie bei anderen bekannten mit nur einem Stift arbeitenden Scharnieren notwendig ist, vergrößert werden müßte. Die Montage/Demontage sollte auch ohne Spezialwerkzeug möglich sein.

Gelöst wird die Aufgabe dadurch, daß das Lagerauge des ersten Scharnierteils von einem Lagerbock mit im Querschnitt U-förmigen, den Lagerbolzen aufnehmenden Profil gebildet wird, der im Eckbereich der Türblattabkantung befestigbar ist und eine über das offene Ende des U-Profils schiebbare Klemmeinrichtung zur klemmenden Befestigung des Lagerbolzens im U-Profils trägt, daß der eine Schenkel des U-Profils des Lagerblocks parallel zur Türblattabkantung liegt und daß von dem anderen Schenkel des U-Profils die Klemmeinrichtung ausgeht.

Durch diese Maßnahmen ergibt sich eine einfache Möglichkeit, das erste Scharnierteil aus dem zweiten Scharnierteil herauszuziehen, ohne daß dazu der Lagerbolzen verschoben werden müßte. Gegenüber dem Stand der Technik ist es auch von Vorteil, daß nicht zwei Teile, sondern nur ein Teil manipuliert werden muß, wobei dieses eine Teil, beispielsweise eine Stiftschraube, nicht vollständig aus dem Scharnier herausgebracht werden muß und daher nicht verloren gehen kann. Ein weiterer Vorteil ist der, daß die Ausrichtung der einzelnen Scharnierteile zueinander erleichtert wird, da nur eine relativ grobe Vorfixierung ausreicht, um anschließend die Klemmeinrichtung anziehen zu können. Demgegenüber muß beim Stand der Technik eine sehr gute Vorfixierung erfolgen. Bei der erfindungsgemäßen Einrichtung genügt auch einfaches Werkzeug, wie ein Schraubenzieher, während beim Stand der Technik mit Spezialwerkzeug und ggf. zusätzlich noch mit einem Hammer gearbeitet werden muß.

Gemäß einer vorteilhaften Weiterbildung ist der eine Schenkel des U-Profils des Lagerbocks parallel zur Türblattabkantung angeordnet, während der andere Schenkel des U-Profils nahe dem Ende des Aufnahmeraums für den Lagerbolzen senkrecht vom erstgenannten Schenkel weggebogen ist und im Abstand zur Türblattebene parallel verläuft und an seinem Ende eine weitere Abbiegung in Richtung auf die Türblattfläche abstützt, wobei die Klemmeinrichtung von einer Schraube mit konisch zulaufendem Vorderende gebildet wird, die in einem von dem abgeknicktem Schenkel gebildeten oder getragenen Gewindebohrung aufgenommen ist.

Der parallel zur Türblattabkantung liegende Schenkel kann zudem auch eine Bohrung zur Aufnahme der Spitze der Schraube aufweisen, wodurch sich die Stabilität beträchtlich erhöht, weil die Schraube nun an beiden Enden gehalten wird.

Das Gewinde kann von einem auf dem parallel zur Türblattebene liegenden Schenkelteil aufgeschraubten oder aufgepunkteten Bügel gebildet werden, was ein besonders preisgünstiges Herstellungsverfahren ermöglicht. Dabei hat sich eine Verfahrensweise zur Herstellung dieses U-Profils bewährt, bei der das U-Profil durch einen zweistufigen Stanzvorgang gebildet ist, bei dem zunächst ein Freistanzen und dann ein Biegen und Formen erfolgt. Dies ergibt einen für die Herstellung des Gewindes besonders günstige, viel Material zur Verfügung stellende Stanzteilausbildung.

Die Schraube kann einen von dem mit Betätigungseinrichtung wie Schraubenzieherschlitz versehenen Ende ausgehenden Gewindeabschnitt, einen daran anschließenden Zylinderabschnitt reduzierten Durchmessers und ein daran anschließendes kegelförmiges Ende umfassen, wobei die Durchmesserreduktion vorzugsweise durch eine Kegelfläche gebildet wird.

Die Klemmeinrichtung kann aber auch von einem Winkelstück gebildet werden, das auf dem abgeknicktem Ende des U-Profils mittels durch ein Langloch im Winkelstück geführter Klemmschraubeneinrichtungen befestigt ist, wobei der eine Schenkel das U-Profil verschließt und ggf. im zur Türblattabkantung parallelen U-Schenkel gestützt ist, und der andere Schenkel sich auf dem Türblatt oder einem auf dem Türblatt aufliegendem Teil des abgeknickten U-Schenkels sich abstützt.

Eine weitere alternative Auführungsform ist dadurch gekennzeichnet, daß die Klemmeinrichtung von einem Spannverschluß, einem federbelasteten Riegel oder von einem Riegel gebildet ist, der von einer Exzenterschraube betätigbar ist.

Die Erfindung wird anhand von Ausführungsbeispielen näher erläutert, die in den Zeichnungen dargestellt sind.

Es zeigt:

Fig. 1 in einer perspektivischen Ansicht das am vertikalen Rahmenschenkel eines Schaltschrankkorpus angebrachte zweite Scharnierteil mit drehbar eingesetztem Lagerbolzen;

Fig. 2 in einer perspektivischen Ansicht eine Ausführungsform des ersten Scharnierteils, angebracht im inneren Abkantungsbereich eines zugehörigen Türblatts;

Fig. 3 in einer teilweise geschnittenen Ansicht von oben die beiden in den Fig. 1 und 2 dargestellten Scharnierteile in zusammengebautem Zustand;

Fig. 4 eine Seitenansicht auf das Scharnier bei abgeschittenem Türblatt;

Fig. 5 die bei der Ausführungsform gemäß Fig. 3 und 4 benutzte Klemmeinrichtung in Form einer Stiftschraube;

Fig. 6 den Lagerbolzen, der gemäß der Fig. 3 und 4 benutzt wird;

Fig. 7, 8, 9 und 10 in vier verschiedenen Ansichten ein durch Stanzen hergestelltes Teil zum Aufbau des ersten Scharnierteils gemäß der Ausführungsform von Fig. 3 und 4;

Fig. 11 ein Vorfabrikat bei der Herstellung des Stanzteils gemäß der Fig. 7 bis 10;

Fig. 12 und 13 in zwei Ansichten ein weiteres Teil, das gemäß Fig. 14 auf das Teil gemäß Fig. 7 bis 10 aufmontiert werden kann und dadurch ein erstes Scharnierteil bildet, wie es in den Fig. 3 und 4 benutzt wird;

Fig. 15 eine Schnittdarstellung des ersten Scharnierteils vor Einführen des Lagerbolzens;

Fig. 16 in einer ähnlichen Ansicht wie Fig. 15 das erste Scharnierteil nach Einfügen des Lagerbolzens und desser Verklemmung mit einer Stiftschraube;

Fig. 17 eine Ansicht von links auf die in Fig. 16 dargestellte Anordnung;

Fig. 18 eine andere Ausführungsform des ersten Scharnierteils;

Fig. 19 u. 20 bzw. 21 u. 22 jeweils in einer Schnittansicht und einer Ansicht von links zwei noch andere Ausführungsformen des ersten Scharnierteils; und

Fig. 23 in vier verschiedenen Ansichten das zweite Scharnierteil in einer Ausführungsform, wie sie in den Fig. 3 und 4 angewendet wird.

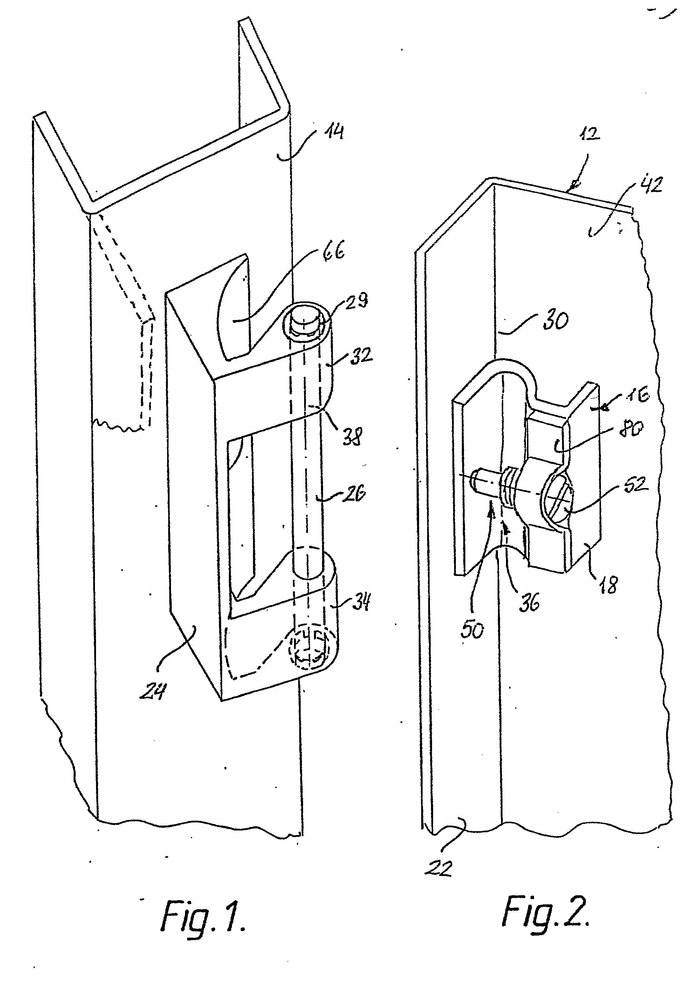

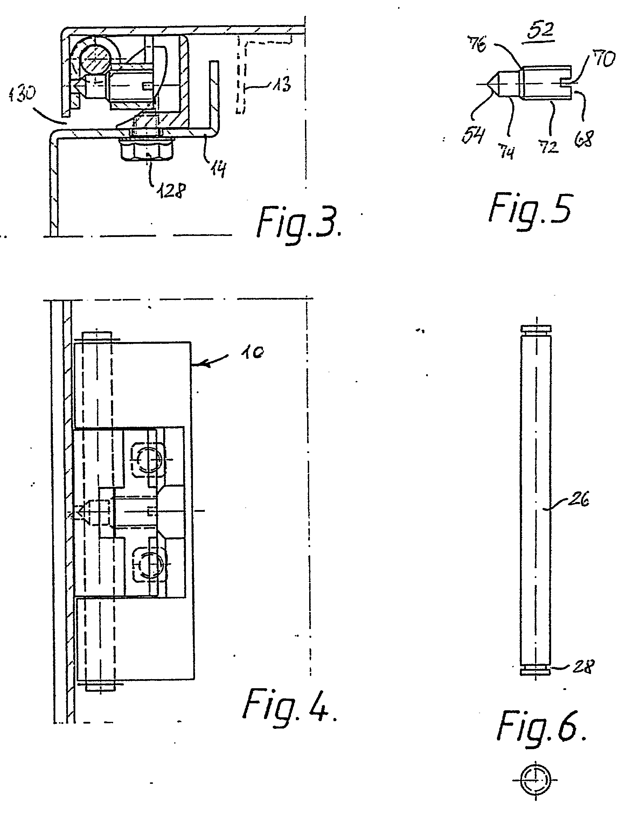

In Fig. 3 ist in einer Draufsicht und Fig. 4 in einer Ansicht von vorn (bei weggeschnittenem Türblatt) ein aushängbares Verschwindscharnier 10 für Schaltschränke zu erkennen, das aus einem ersten auf der Innenseite in dem Eckbereich 30 des Türblatts 12 befestigtes festes Scharnierteil 16, das ein "Lagerauge" 36 in noch näher zu beschreibender Weise bildet, sowie einem zweiten Scharnierteil 24 besteht, das, wie Fig. 4 erkennen läßt, im zusammengebautem Zustand das erste Scharnierteil umgreift und mit einem vertikalen Rahmenschenkel 14 des Schrankgehäuses verbunden ist. Das zweite Scharnierteil 24 ist, wie Fig. 1 erkennen läßt, U-förmig ausgebildet und besitzt in seinen U-Schenkel enden 32, 34 jeweils ein Lagerauge 38, in die ein Lagerbolzen 26 einschiebbar und drehbar gehalten werden kann. Damit dieser Lagerbolzen nicht herausfallen kann, besitzt er an seinen beiden Enden jeweils eine Ringnut 28, siehe Fig. 6, zur Aufnahme eines Sicherungsringes 29, siehe Fig. 1.

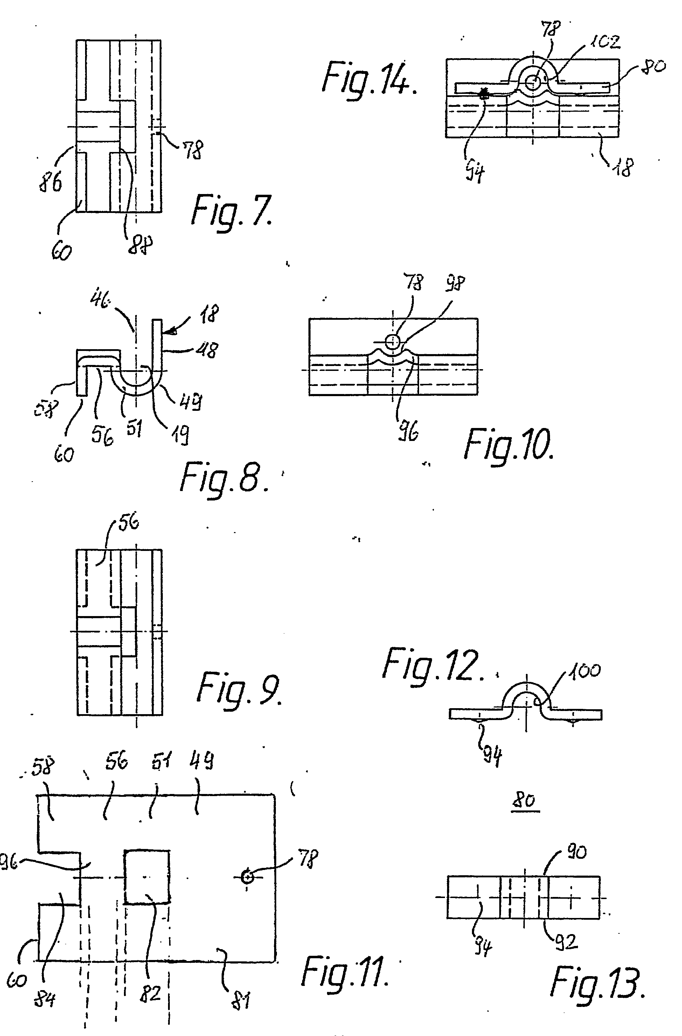

Das Lagerauge 36 des ersten Scharnierteils 16 wird dabei von einem Lagerbock 18 mit U-förmigen, den Lagerbolzen 26 aufnehmenden Querschnitt 19, siehe Fig. 8, gebildet, der im Eckbereich 30 der Türblattabkantung 22 befestigbar ist, beispielsweise durch Punktverschweißung.

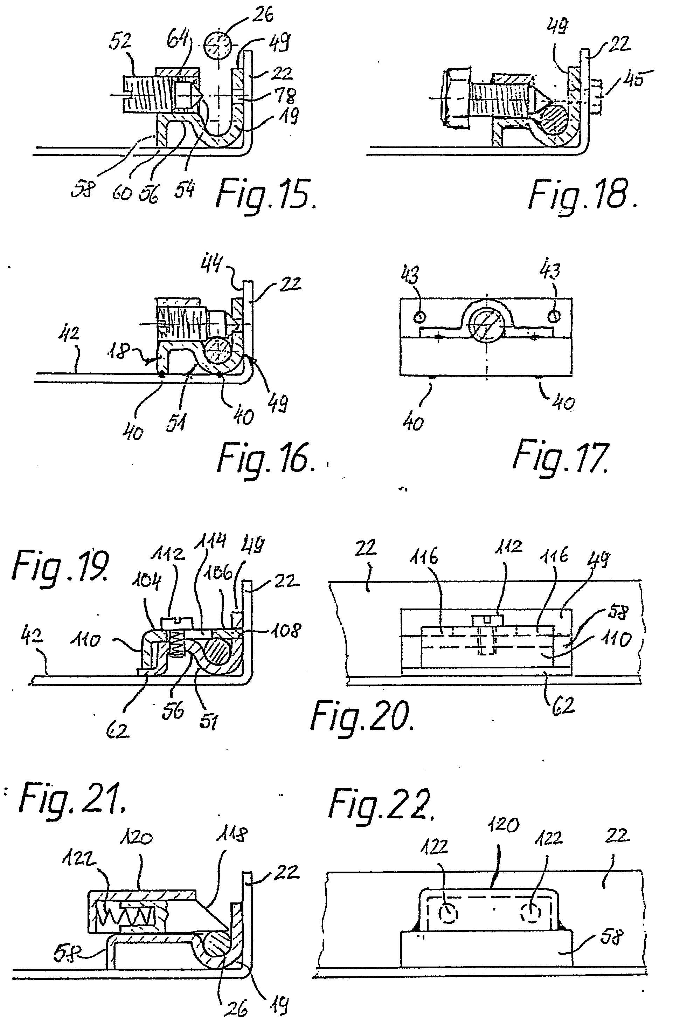

Derartige Verschweißungspunkte sind in den Fig. 16 und 17 dargestellt, wobei die Verschweißung hier mit der Türblattinnenfläche 42 erfolgt, jedoch kann zusätzlich oder stattdessen der Lagerbock 18 auch an der Innenfläche 44 der Abkantung 22 angepunktet sein.

Diese Befestigungsart hat den Vorteil, daß sie ohne Durchbrüche und ohne besondere Befestigungsschrauben auskommt und daher optisch nach außen hin nicht in Erscheinung tritt, was für ein sogenanntes "Verschwind"-Scharnier von besonderer Bedeutung ist.

Andere Befestigungsarten sind allerdings möglich, beispielsweise ist eine Verklebung der Außenfläche 48 des z. B. in Fig. 8 dargestellten Lagerbockes 18 mit der Innenfläche 44 der Abkantung möglich, wie auch hier eine Verschraubung denkbar wäre, z. B. mittels Kopfschrauben 45, die durch die Abkantung 22 hindurchgeführt sind und in entsprechende Gewindebohrungen 43 des parallel zur Abkantung 22 liegenden Schenkels 49 (siehe z. B. Fig. 18) so eingeschraubt sein können, daß sie über die Innenfläche dieses Schenkels 49 nicht hervorstehen und dadurch das Einführen des Lagerbolzens 26 in den U-Querschnitt 19 nicht behindern.

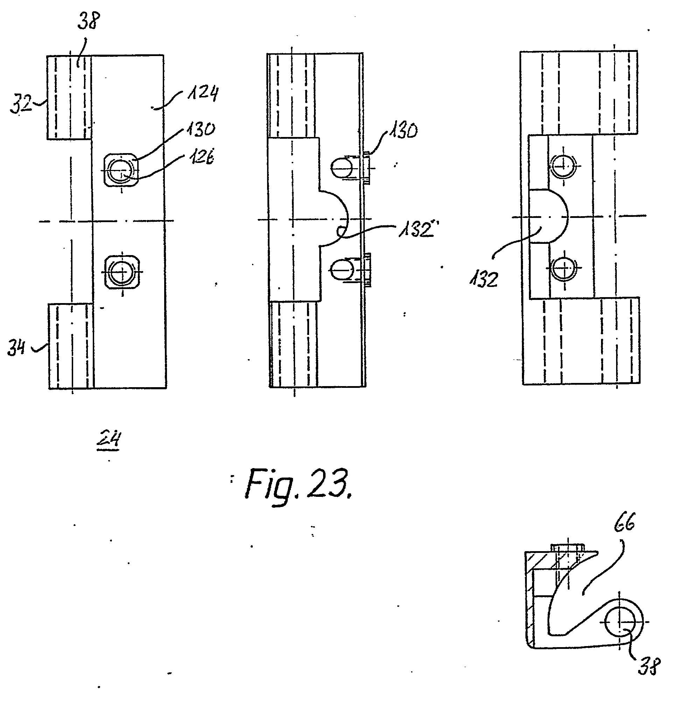

Um zu verhindern, daß nach dem Einführen des Lagerbolzens 26 in den U-Querschnitt 19 der Lagerbolzen sich wieder ungewollt aus diesem Bereich entfernt, ist eine über das offene Ende des U-Querschnitts 19 schiebbare Klemmeinrichtung 50 zur klemmenden Befestigung des Lagerbolzens 26 im U-Querschnitt 19 vorgesehen. Die Klemmeinrichtung kann verschiedene Ausführungsformen haben, beispielsweise kann es sich um eine Stiftschraube 52 handeln, die ein konisch zulaufendes Vorderende 54 aufweist, siehe Fig. 5, das in einer von dem abgeknicktem Schenkel 56 gebildeten oder getragenen Gewindebohrung 58 aufgenommen ist. Diese Ausführungsform ist beispielsweise in Fig. 15 und 16 zu erkennen, wobei wiederum der eine Schenkel 49 des U-Profils 19 des Lagerbockes 18 parallel zur Türblattabkantung 22 liegt, vorzugsweise an diese anliegend und möglicherweise mit dieser verklebt, verschweißt oder verschraubt, wie weiter oben bereits beschrieben. Demgegenüber ist der andere Schenkel 51 des U-Profils 19 nahe dem Ende des Aufnahmeraumes für den Lagerbolzen 26 senkrecht vom Schenkel 49 weggebogen, siehe Bezugszahl 56, um hier im Abstand parallel zur Türblattfläche 42 zu verlaufen und schließlich erneut auf die Türblattfläche 42 sich zuzuwenden, siehe Bezugszahl 58, um dann mit der Stirnfläche 60 dieser Abnickung 58 (oder mit einem durch noch eine Abnickung gebildeten Fußteil 62, siehe die in Fig. 19 dargestellte Ausführungsform) sich auf der inneren Türblattebene 42 abzustützen. Diese Stirnfläche 60 oder der Fußteil 62 kann dann in der bereits beschriebenen Weise mit der Türblattebene 42 verpunktet sein, siehe die bereits erwähnte Bezugszahl 40. Die Klemmeinrichtung besteht gemäß Fig. 15 aus einer Stiftschraube 52 mit konisch zulaufendem Vorderende 54, siehe auch die gesondert in Fig. 5 herausgestellte Darstellung dieser Schraube, welche Stiftschraube in einer von dem abgeknicktem Schenkel 51 gebildeten oder getragenen Gewindebohrung 64 aufgenommen worden ist. In Fig. 15 ist zunächst eine Stellung dieser Stiftschraube dargestellt, die es ermöglicht, den Bolzen 26 in den Querschnittsraum des U-Profils 19 an der Spitze 54 der Stiftschraube 52 vorbei einzuführen. In dieser Stellung der Schraube 52 kann somit das Türblatt 12 gemäß Fig. 2 mit seinem Scharnierteil 16 in das Scharnierteil 24, das bereits am Schrankkorpus 14 befestigt ist und den Lagerbolzen 26 bereits trägt, wie in Fig. 1 zu erkennen, eingehängt werden. Infolge der von den beiden U-Schenkeln 32, 34 des zweiten Scharnierteils 24 gebildeten Einschnittes 66, siehe auch die Fig 23, die den zweiten Scharnierteil in vier verschiedenen Ansichten noch näher erkennen läßt, in welchen Einschnitt 66 die Abkantung 22 des Türblatts 12 eindringen kann, kann das Einhängen in geöffneter Türblattstellung erfolgen, so daß das Betätigungsende 68 der Stiftschraube 52, beispielsweise also der Schraubenziehenschlitz 70 ohne Probleme zugänglich ist und die Stiftschraube nunmehr soweit eingedreht werden kann, daß sie entweder mit ihrem konischen Vorderende 54, wie es die Fig. 18 erkennen läßt, oder mit einem Zylinderabschnitt 74, der gegenüber dem Gewindeabschnitt 72 der Stiftschraube 52 einen etwas reduzierten Durchmesser besitzt, den Scharnierbolzen 26 festhält.

Die Verklemmungswirkung kann erhöht werden, wenn die Durchmesserreduktion zwischen dem Gewindeabschnitt 72 und dem Gewindeabschnitt 74 durch eine Kegelfläche 76 gebildet wird, die sich beim Festziehen der Stiftschraube 52 gegen den Umfang des Lagerbolzens 26 legt, siehe auch die Fig. 16, die diese Stellung wiedergibt.

Der parallel zur Türblattabkantung 22 liegende Schenkel 49 des U-Profils 19 kann, wie auch in den Fig. 15 und 16 dargestellt, eine Bohrung 78 zur Aufnahme der Spitze 54 der Stiftschraube 52 aufweisen, um die Stiftschraube an beiden Enden innerhalb des U-Profils 19 zu lagern und dadurch die Stabilität der Anordnung noch weiter zu erhöhen. Bei genauer Bemassung der Bauteile ist auch erreichbar, daß eine Verklemmung des Bolzens 26 durch die Kegelfläche 76 und gleichzeitig ein Anliegen der Spitze 54 in der Bohrung 78 sich ergibt, so daß eine insgesamt starre und feste Verbindung zwischen dem ersten Scharnierteil 18 und dem Lagerbolzen 26 entsteht. Die Scharnierbewegung ergibt sich dann durch die Rotation des Lagerbolzens 26 in den Bohrungen 38 des zweiten Scharnierteils.

Falls die Stiftschraube dem Bolzen etwas Spiel läßt, könnte aber auch der Lagerbolzen 26 im zweiten Scharnierteil 24 fest verankert sein und die Drehbewegung innerhalb des ersten Scharnierteils 16 erfolgen. Diese Ausführungsform ist aber ungünstiger, weil die Haltefläche, die durch die Stiftschraube gegeben wird, verhältnismäßig klein ist und dadurch die Gefahr besteht, daß im Laufe der Zeit der Bolzen 26 durch die Stiftschraube beschädigt wird.

Falls aber erwünscht, könnte die Anlagefläche der Stiftschraube vergrößert werden durch eine dem Radius der Stiftschraubenspitze angepaßte Hohlkehle im Lagerbolzen 26.

Das erste Scharnierteil 16 kann, ähnlich wie das zweite Scharnierteil 24, durch Spritzgießen hergestellt sein, in welchem Falle die Gewindebohrung im Material dieses Spritzgußteiles angebracht werden könnte. Preiswerter ist es, das Bauteil 16 durch Stanz- und Preßverfahren herzustellen, wie es beispielsweise in den Fig. 7 bis 14 näher erläutert ist. Ausgegangen wird dort von Flachmaterial, daß durch verschiedene Stanz- und Formschritte und Punktverschweißung die Ausführungsformen gemäß Fig. 3 und 4 oder auch 15 bis 17 ergibt.

Zunächst wird das U-Profil 19 dadurch vorbereitet, daß in einem ersten Stanzschritt ein flacher Rohling 81 hergestellt wird, dessen späterer Schenkel 49 bereits den Durchbruch 78 aufweist. Außerdem ist eine rechteckige innere Freistanzung 82 sowie eine weitere rechteckige einschnittförmige Freistanzung 84 zu erkennen.

Beim zweiten Biege- und Formstanzschritt entsteht dann die Querschnittsform gemäß Fig. 8, mit zwei infolge der Freistanzungen 82 und 84 scharfen Kanten an den Rändern 86 und 88. Das ist günstig, weil hier der spätere Gewindebereich 64 gebildet werden soll. Zu diesem Zweck wird ein weiteres Stanzteil hergestellt und zwar durch Stanzen und gleichzeitiges oder anschließendes Biegen in die in den Fig. 12 und 13 dargestellte Bügelform, die ebenfalls an den Seitenflächen 90, 92 scharfkantig ist. Dieser Bügel wird auf den Stegbereich 56 aufgesetzt und dort beispielsweise festgeschraubt oder vorzugsweise punktverschweißt, siehe die Schweißpunkte 94 in den Fig. 12, 13 und 14. Durch Materialfließen kann der zwischen den beiden Einstanzungsbereichen 84, 86 verbleibende Steg 96 zu einer Art Wellenform verformt werden, wie sie in Fig. 10 zu erkennen ist. Diese Wellenform erzeugt einen Teilkreis 98, der einen entsprechenden Teilkreis 100 des Bügels 80, siehe Fig. 12, gemäß Fig. 14 zu einem im wesentlichen geschlossenen Innenkreis 102 schließt, nachdem der Bügel 80 auf den Lagerbock 18 aufgepunktet wurde. Nunmehr kann in die dadurch gebildete "Bohrung" ein Gewinde mit scharfen Endflächen eingeschnitten werden, wodurch dann die Gewindebohrung 64 fertiggestellt wäre. Durch dieses Stanzverfahren entsteht somit mit Hilfe von ausschließlich Flachmaterial mit einfachen Stanz-, Form- und Punktschweißschritten das in den Fig. 15, 16 oder 17 dargestellte Scharnierteil, wobei die scharfe Schnittkante 60 beim Teil 81 die spätere Stirnfläche 60 wird.

Statt einer Stift- oder Madenschraube 52 kann natürlich auch eine Schraube benutzt werden, die einen Kopf besitzt, beispielsweise einen Sechskantkopf, wie in Fig. 18 zu erkennen ist.

Die Klemmeinrichtung kann aber auch anders ausgestaltet sein, beispielsweise dadurch, daß auf das U-Profil in der Querschnittsform gemäß Fig. 15 nicht ein Bügel 18 aufgesetzt wird, sondern ein Winkelstück 104, dessen einer Schenkel 106 das U-Profil verschließt und ggf. im zur Türblattabkantung 22 parallelen U-Schenkel 49 gestützt ist, Bezugszahl 108, und dessen anderer Schenkel 110 sich auf der Türblattinnenfläche 42 oder auf einem auf dem Türblatt aufliegenden weiter abgewinkelten Teil 62 des U-Schenkels 51 abstützt. Verklemmt wird dieses Winkelstück 104 auf dem Lagerbock 18 mit Hilfe einer Kopfschraube 112, die durch ein Langloch 114 im Schenkel 106 hindurchgesteckt in einer Gewindebohrung im abgeknickten Schenkelbereich 56 eingeschraubt ist. Die Stützung 108 kann durch zwei Rechteckschlitze 116 im Schenkel 49 erfolgen, die in entsprechende Vorsprünge oder Nasen des Schenkels 106 eingreifen, siehe Fig. 20.

In den Fig. 21 und 22 ist eine noch weitere Ausführungsform für eine Klemmeinrichtung dargestellt, bestehend aus einem federbelasteten Riegel 118, der in einer entsprechenden Führung 120 gegen die Kraft der Feder 122 durch beispielsweise eine hier nicht dargestellte Exenterschraube soweit gemäß Fig. 21 nach links verschoben werden kann, daß der Lagerbolzen aus dem U-Profil 10 herausgezogen werden kann. Infolge einer Schrägfläche ist das Einführen hier erleichtert, da der Lagerbolzen 26 dann den Riegel 118 selbsttätig beiseite drückt und in seine Betriebsstellung gelangt, während durch die Kraft der Feder 122 der Riegel dann in seine Blockierstellung springt.

Das am Schrankkorpus befestigte zweite Scharnierteil 24 ist in Fig. 23 dargestellt. Es hat prinzipiell U-Form, mit dem bereits erwähnten Schenkeln 32, 34, die die Lageraugen 38 für den Scharnierbolzen 26 aufweisen. Die beiden Schenkel 32, 34, sind durch einen Steg 124 miteinander verbunden, der im Bereich zwischen den beiden Schenkeln 32, 34 zwei Gewindebohrungen 126 zur Aufnahme von Befestigungsschrauben 128 besitzt, die durch entsprechende Bohrungen im Schrankkorpus 14 hindurchgeführt sind und das Scharnierteil 24 an diesem festlegen. Zur genaueren Zentrierung können von der Auflagefläche des Steges 124 noch rechteckige Vorsprünge 130 ausgehen, die in entsprechend geformte Durchbrüche im Schrankkorpus 14 einsetzbar sind und auf diese Weise eine genaue Position des Scharnierteils 24 bezüglich des Schrankkorpus 14 sicherstellen. Auch wird auf diese Weise der Schraubbolzen 128 gegen Scherkräfte abgeschirmt, so daß sich insgesamt eine stabilere Befestigung ergibt. Zwischen den beiden Bohrungen 126 ist ein kreisförmiger Bereich 132 ausgenommen, um Platz zu schaffen für den Bewegungsweg der Stiftschraube 52 mit ihrem das Gewinde 64 bildenden Bügel 80. Außerdem ist der bereits früher erwähnte Einschnitt 66 zu erkennen, der zur Aufnahme der Abkantung 22 des Türblatts 12 dient, wobei je nach Erstreckung der Abkantung 22 weg von der Türblattinnenfläche 42 sich ein bestimmter maximaler Öffnungswinkel für das Türblatt bezüglich des Türrahmens ergibt. Bei der in Fig. 3 dargestellten Abmessung ergibt sich ein maximaler Öffnungswinkel von 120 bis 140°. Wenn ein größerer Abstand des Türblatts vom Schrankkorpus, also ein größerer Spalt 130 nicht stört, können die Maßverhältnisse so abgewandelt werden, daß auch ein Türöffnungswinkel von 180° erreicht wird. Dazu müßte die Drehachse des Scharnierbolzens einen etwas größeren Abstand von der Türblattinnenfläche erhalten und die Tiefe des Einschnittes 66 noch weiter hinter die parallel zur Türblattfläche liegende Ebene durch die Schwenkachse verlegt werden, so daß diese Tiefe die gleiche Größe erhält, wie das Maß, um den die Abkantung über diese Achsenebene vorspringt.

Die beschriebenen Ausführungsformen erlauben es, durch Lösen der Klemmeinrichtung, beispielsweise der Stiftschraube 42 gemäß Fig. 2, ohne daß die Klemmeinrichtung vollständig herausgenommen werden müßte, das Scharnierteil 16 aus dem Scharnierteil 24 auszuhängen und damit nas Türblatt 12 vom Schrankkörper abzunehmen. Die Betätigungseinrichtung ist horizontal zugänglich, so daß die Scharniereinrichtung auch ganz oben in die Ecke gelegt werden kann, was manchmal aus Stabilitätsgründen von Vorteil ist. Durch die besondere Form des Scharnierteils 18 ergibt sich eine trichterartige Öffnung, die das Einfädeln des Scharnierteils 18 in das Scharnierteil 24 beim Wiedereinsetzen der Tür sehr erleichtert. Dies ist besonders wichtig, wenn mehrere Scharniere an einem Türblatt befestigt sind. Nach grobem Einhängen kann ohne genaue Ausrichtung durch einfaches Festziehen der Stiftschrauben 52 eine Verklemmung und gleichzeitige genaue Justierung erreicht werden, dies infolge der konischen Ausbildung der Stiftschrauben 52. Es ist handelsübliches Werkzeug ausreichend, wie beispielsweise ein Schraubenzieher.

Gegenüber dem Stand der Technik muß nur ein Bauteil manipuliert werden, und es reicht eine ungenaue Vorfixierung, weil die konische Schraube für den genauen Sitz im U-förmigen Scharnierteil bei deren Anziehen sorgt. Falls das zweite Scharnierteil infolge eines besonderen Aufbaus des Türblatts, siehe beispielsweise den in Fig. 3 gestrichelt dargestellten zusätzlichen Winkel 132, so daß für die Scharniereinrichtungen ein kanalartiger Unterbringungsraum entsteht, schlechter zugänglich ist, könnte anstelle der Stiftschraube mit Schraubenzieherschlitz eine Schraube mit Innenbrustkopf oder eine Schraube gemäß Fig. 18, also mit Sechskantkopf zur Anwendung kommen, ohne daß die Montagemöglichkeiten sich verschlechtern.

## Patentansprüche

1. Aushängbares Verschwindscharnier für Schaltschränke mit einem Türblatt (12), das eine einen Eckbereich (30) bildende Türblattabkantung (22) aufweist, bestehend aus einem ersten, auf der Innenseite (42) des Türblatts (12) im Eckbereich (30) befestigten Scharnierteil (16) mit einem Lagerauge (36), aus einem zweiten, das erste Scharnierteil (16) U-förmig umgreifenden, mit einem vertikalen Rahmenschenkel (14) des Schrankkorpus verbundenen zweiten Scharnierteil (24) mit zwei Lageraugen (38) in den U-Schenkelenden (32, 34), und einer Lagerbolzeneinrichtung (26) zur gelenkigen Verbindung der Scharnierteile (16, 24), dadurch gekennzeichnet, daß das Lagerauge (36) des ersten Scharnierteils (16) von einem Lagerblock (18) mit im Querschnitt U-förmigem, den Lagerbolzen aufnehmenden Profil (19) gebildet wird, der in dem Eckbbereich (30) der Türblattabkantung (22) befestigbar ist und eine über das offene Ende (46) des U-Profils (19) schiebbare Klemmeinrichtung (50) zur klemmenden Befestigung des Lagerbolzens (26) im U-Profil (19) trägt, daß der eine Schenkel (49) des U-Profil (19) des Lagerbockes (18) parallel zur Türblattabkantung (22) legt und daß von dem anderen Schenkel (51) des U-Profils (19) die Klemmeinrichtung ausgeht.

2. Verschwindscharnier nach Anspruch 1, dadurch gekennzeichnet, daß der andere Schenkel (51) des U-Profils (19) nahe dem Ende des Aufnahmeraumes für den Lagerbolzen (26) senkrecht vom erstgenannten, parallel zur Türblattabkantung liegendem Schenkel (49) weggebogen ist (56) und im Abstand zur Türblattebene (42) parallel verläuft und an seinem Ende eine weitere Abbiegung (58) in Richtung auf die Türblattfläche (42) aufweist und sich mit dieser auf der Türblattfläche abstützt.

3. Verschwindscharnier nach Anspruch 1 oder 2, dadurch gekennzeichnet, daß die Klemmeinrichtung (50) von einer Schraube (52) mit konisch zulaufendem Vorderende (54) gebildet wird, die in einer von dem abgeknickten Schenkel (56) gebildeten oder getragenen Gewindebohrung (64) aufgenommen ist.

4. Verschwindscharnier nach einem der Ansprüche 1 bis 3, dadurch gekennzeichnet, daß der parallel zur Türblattabkantung (22) liegende Schenkel (49) eine Bohrung (78) zur Aufnahme der Spitze (54) der Schraube (52) aufweist.

5. Verschwindscharnier nach Anspruch 3 oder 4, dadurch gekennzeichnet, daß das Gewinde (64) von einem auf dem parallel zur Türblattebene (42) liegenden Schenkelteil (56) aufgeschraubten oder aufgepunkteten Bügel (80) gebildet wird.

6. Verschwindscharnier nach einem der Ansprüche 1 bis 5, dadurch gekennzeichnet, daß das U-Profil (19) durch einen zweistufigen Stanzvorgang gebildet ist, bei dem zunächst ein Freistanzen (82, 84) und dann ein Biege- und Formstanzen erfolgt.

7. Verschwindscharnier nach einem der Ansprüche 1 bis 6, dadurch gekennzeichnet, daß die Schraube (52) einen von dem mit Betätigungseinrichtung wie Schraubenzieherschlitz (70) versehenen Ende (68) ausgehenden Gewindeabschnitt (72), einen daran anschließenden Zylinderabschnitt (74) reduzierten Durchmessers und ein daran anschließendes kegelförmiges Ende (54) umfaßt, wobei die Durchmesserreduktion vorzugsweise durch eine Kegelfläche (76) gebildet ist.

8. Verschwindscharnier nach Anspruch 1 oder 2, dadurch gekennzeichnet, daß die Klemmeinrichtung (50) von einem Winkelstück (104) gebildet ist, daß auf dem abgeknickten Ende (56) des U-Profils (19) mittels durch ein Langloch (114) im Winkelstück geführter Klemmschraubeneinrichtungen (112) befestigt ist, wobei der eine Schenkel (106) des Winkelstücks (104) das U-Profil (19) verschließt und ggf. im zur Türblattabkantung (22) parallelen U-Schenkel (49) abgestützt ist (108, 116), und dessen anderer Schenkel (110) sich auf dem Türblatt (42) oder auf einem auf dem Türblatt (42) aufliegenden Teil (62) des abgeknickten U-Schenkels (56) abstützt.

9. Verschwindscharnier nach Anspruch 1 oder 2, dadurch gekennzeichnet, daß die Klemmeinrichtung von einem Spannverschluß, einem federbelasteten Riegel (118, Fig. 21) oder von einem Riegel gebildet ist, der von einer Exenterschraube betätigbar ist.

## Claims

1. Unhingeable concealed hinge for switching boxes with a door leaf (12) having a door leaf edge (22) forming a corner region (30), comprising a first hinge part (16) attached to the inside (42) of the door leaf (12) in the corner region (30) with a bearing eye (36), a second hinge part (24) surrounding the first hinge part (16) in the shape of a U, connected to a vertical frame leg (14) of the body of the box, said second hinge part (24) having two bearing eyes (38) in the ends of the U-legs (32, 34), and a bearing bolt arrangement (26) for the articulated connection of the hinge parts (16, 24), characterised in that the bearing eye (36) of the first hinge part (16) is formed by a bearing block (18) with a section (19) U-shaped in cross-section which takes up the bearing bolt, said bearing block being fixable in the corner area (30) of door leaf edge (22) and having a clamping arrangement (50) which can be pushed over the open end (46) of the U-section (19) for clamping the bearing bolt (26) in the U-section (19), and in that the one leg (49) of the U-section (19) of the bearing block (18) lies parallel to the door leaf edge (22), and in that the clamping device extends from the other leg (51) of the U-section (19).

2. Concealed hinge according to claim 1, characterised in that the other leg (51) of the U-section (19) is bent away (56) perpendicularly from the first leg (49) lying parallel to the door leaf edge near the end of the take-up space for the bearing bolt (26) and runs parallel and at a distance to the plane of the door leaf (42) and has a further bend (58) at its end in the direction of the door leaf surface (42) and is supported with the latter on the door leaf.

3. Concealed hinge according to claim 1 or 2, characterised in that the clamping arrangement (50) is formed by a screw (52) with a conical front end (54) which is taken up in a threaded boring (64) formed or carried by the bent leg (56).

4. Concealed hinge according to any one of claims 1 to 3, characterised in that the leg (49) lying parallel to the door leaf edge (22) has a boring (78) for receiving the tip (54) of screw (52).

5. Concealed hinge according to claim 3 or 4, characterised in that the thread (64) is formed by a hoop (80) screwed or welded onto the leg section (56) lying parallel to the plane of the door leaf (42).

6. Concealed hinge according to any one of claims 1 to 5, characterised in that the U-section (19) is formed by a two-stage stamping process in which first free stamping (82, 84) and then bending and shaping stamping takes place.

7. Concealed hinge according to any one of claim 1 to 6, characterised in that the screw (52) surrounds a threaded section (72) extending from the end (68) provided with an operating device such as a screwdriver slit (70), a connected cylinder section (74) with a reduced diamter and an adjoining conical end (54), the diamter reduction preferably being formed through a tapered surface (76).

8. Concealed hinge according to claim 1 or 2, characterised in that the clamping device (50) is formed by an angled section (104) which is attached to the bent end (56) of the U-section (19) by means of a locking screw arrangement (112) passed through a oblong hole (114) in the angled section, whereby one leg (106) of the angled section (104) closes the U-section (19) and, if necessary, is supported (108, 116) in the U-leg (49) parallel to the door leaf edge (22), the other (110) being supported on the door leaf (42) or on a section (62) of the bent U-section (56) lying on the door leaf (42).

9. Concealed hinge according to claim 1 or 2, characterised in that the clamping device is formed by a tension fastener, a spring bolt (118, Fig. 21) or a bolt which can be operated by an eccentric screw.

## Revendications

1. Charnière escamotable à suspension pour armoires de commutation comprenant un battant de porte (12) comportant un bord replié (22) délimitant un coin intérieur (30), qui est constituée par une première partie de charnière qui est fixée sur le côté intérieur (42) du coin (30) du battant (12) et comporte un œillet de palier (36), par une deuxième partie de charnière (24) en forme d'U qui entoure la première partie de charnière (16), est fixée sur un montant de cadre vertical (14) du corps de l'armoire et comporte deux œillets de palier (38) ménagés dans les extrémités (32, 34) de l'U et par un dispositif comportant des chevilles de palier (26) et assurant la liaison articulée entre les parties de charnière (16, 24), caractérisée en ce que l'oeillet de palier (36) de la première partie de charnière (16) est constitué par un support de palier (18) qui présente en coupe un profil (19) en U pour la réception de la cheville de palier, qui peut être fixé dans le coin intérieur (30) du bord de battant de replié (22) et qui porte un dispositif de serrage (50) qui peut être poussé sur l'extrémité ouverte (46) du profil (19) en U pour la fixation par serrage de la cheville de palier (26) dans le profil (19) en U, en ce que l'une des branches (49) du profil (19) en U de support de palier (18) est parallèle au bord (22) du battant de porter et en ce que le dispositif de serrage part de l'autre branche (51) du profil (19) en U.

2. Charnière escamotable selon la revendication 1, caractérisée en ce qu'à proximité de l'extrémité de l'espace de réception de la cheville de palier (26) l'autre branche (51) du profil (19) en U est pliée (56) de manière à s'écarter, perpendiculairement à elle, de la première branche (49) parallèle au bord du battant de porte et s'étend, à une certaine distance du plan (42) du battant de porte et parallèlement à ce plan, avant d'être pliée (58) encore une fois à son extrémité pour s'étendre ensuite dans la direction de la surface (42) du battant de porte sur laquelle elle prend appui.

3. Charnière escamotable selon l'une des revendications 1 ou 2, caractérisée en ce que le dispositif de serrage (50) est constitué par une vis (52) qui comporte une extrémité antérieure conique (54) et qui est engagée dans un alésage fileté (64) constitué ou porté par la branche pliée (56).

4. Charnière escamotable selon une des revendications 1 à 3, caractérisée en ce que la branche (49) qui est parallèle au bord (22) du battant de porte comporte un alésage (78) destiné à recevoir la pointe (54) de la vis (52).

5. Charnière escamotable selon l'une des revendications 3 ou 4, caractérisée en ce que le filetage (64) est constitué par un étrier (20) vissé ou encastré dans la branche (56) parallèle au plan (42) du battant de porte.

6. Charnière escamotable selon une des revendications 1 à 5, caractérisée en ce que le profil (19) en U est obtenu par une opération d'estampage en deux stades comportant d'abord un estampage libre, puis un poinçonnage avec flexion.

7. Charnière escamotable selon une des revendications 1 à 6, caractérisée en ce que la vis (52) comprend d'abord un secteur fileté (72) qui part de l'extrémité (68) comportant un dispositif de manœuvre, constitué par exemple par une rainure (72) destinée à un tournevis, puis, à la suite, un secteur cylindrique (74) de diamètre plus réduit, puis une extrémité conique (54), la réduction de diamètre étant obtenue de préférence par une surface conique (76).

8. Charnière escamotable selon l'une des revendications 1 ou 2, caractérisée en ce que le dispositif de serrage (50) est constitué par une pièce angulaire (104), qui est fixée sur l'extrémité pliée (56) du profil (19) en U au moyen de dispositifs de serrage par vis (112) guidés dans un trou oblong (114) ménagé dans la pièce angulaire, l'une des branches (116) de la pièce angulaire fermant le profil (19) en U et prenant appui (108, 116), le cas échéant, dans la branche (49) de l'U qui est parallèle au bord (22) du battant de porte et l'autre branche (110) prenant appui sur le battant de porte (42) ou sur une partie (62) de la branche pliée (56) de l'U qui s'applique contre le battant de porte (42).

9. Charnière escamotable selon l'une des revendications 1 ou 2, caractérisée en ce que le dispositif de serrage peut être mis en action par une fermeture de serrage, par un verrou soumis à l'action d'un ressort (118, Figure 21) ou par un verrou qui peut être mis en action par une vis d'excentrique.

*Fig.1.*

*Fig.2.*

Fig.3.

Fig.5.

Fig.4.

Fig.6.

Fig. 7.

Fig. 14.

Fig. 8.

Fig. 10.

Fig. 9.

Fig. 12.

80

Fig. 11.

Fig. 13.

Fig.15.

Fig.18.

Fig.16.

Fig.17.

Fig.19.

Fig.20.

Fig.21.

Fig.22.

38

32

124

130

126

34

130

132

132

24

*Fig. 23.*

66

38